# EUROPEAN PATENT SPECIFICATION

(11) **EP 2 486 562 B1**
(45) Date of publication and mention of the grant of the patent: **11.12.2013**
(21) Application number: 10768905.1
(22) Date of filing: 07.10.2010
(51) Int. Cl.: G10L 25/78, G10L 15/14

(54) **METHOD FOR THE DETECTION OF SPEECH SEGMENTS**
VERFAHREN ZUR SPRACHSEGMENTBESTIMMUNG
PROCÉDÉ DE DÉTECTION DE SEGMENTS DE PAROLE

(30) Priority: 08.10.2009 ES 200930819
(43) Date of publication of application: 15.08.2012
(73) Proprietor: Telefónica, S.A., 28013 Madrid (ES)
(72) Inventor: GARCIA MARTINEZ, Carlos, E-28013 Madrid (ES); DUXANS BARROBÉS, Helenca, E-28013 Madrid (ES); SENDRA VICENS, Mauricio, E-28013 Madrid (ES); CADENAS SANCHEZ, David, E-28013 Madrid (ES)
(74) Representative: Carpintero Lopez, Francisco
(86) International application number: PCT/EP2010/065022
(87) International publication number: WO 2011/042502

(56) References cited:
- FR-A1- 2 856 506
- OTHMAN H ET AL: "A semi-continuous state-transition probability HMM-based voice activity detector", EURASIP JOURNAL ON AUDIO, SPEECH, AND MUSIC PROCESSING, vol. 2007, no. 1, 1 January 2007 (2007-01-01), XP002624685, New York, NY, United States ISSN: 1687-4714, DOI: 10.1155/2007/43218

## Description

### Field of the Invention

The present invention belongs to the area of speech technology, particularly speech recognition and speaker verification, specifically to the detection of speech and noise.

### Background of the Invention

Automatic speech recognition is a particularly complicated task. One of the reasons is the difficulty of detecting the beginnings and ends of the speech segments pronounced by the user, suitably discriminating them from the periods of silence occurring before beginning to speak, after finishing, and those periods resulting from the pauses made by said user to breathe while speaking.

The detection and delimitation of pronounced speech segments is fundamental for two reasons. Firstly, for computational efficiency reasons: the algorithms used in speech recognition are fairly demanding in terms of computational load, so applying them to the entire acoustic signal, without eliminating the periods in which the voice of the user is not present, would involve triggering the processing load and, accordingly, would cause considerable delays in the response of recognition systems. Secondly, and not less importantly, for efficacy reasons: the elimination of signal segments which do not contain the voice of the user considerably limits the search space of the recognition system, substantially reducing its error rate. For these reasons, the commercial automatic speech recognition systems include a module for the detection of noise and speech segments.

As a consequence of the importance of the speech segment detection, a number of efforts have been made to suitably perform this task.

For example, Japanese patent application JP-A-9050288 discloses a method for the detection of speech segments. Specifically, the beginning and end points of the speech segment are determined by means of comparing the amplitude of the input signal with a threshold. This method has the drawback that the operation depends on the level of the noise signal, so its results are not suitable in the presence of noises with a large amplitude.

In turn, Japanese patent application JP-A-1244497 discloses a method for the detection of speech segments based on calculating the energy of the signal. Specifically, the mean energy of the first speech frames is calculated and the value obtained is used as an estimation of the energy of the noise signal overlapping the voice. Then the voice pulses are detected by means of comparing the energy of each signal frame with a threshold dependent on the estimated energy of the noise signal. The possible variability of energy values of the noise signal is thus compensated. However, the method does not work correctly when there are noise segments with a large amplitude and short duration.

United States patent US-6317711 also discloses a method for the detection of speech segments. In this case, a feature vector is obtained for each signal frame by means of LPC cepstral and MEL cepstral parameterization. Then the minimum value of said vector is sought and all the elements of said vector are normalized by dividing their value by this minimum value. Finally, the value of the normalized energy is compared with a set of predetermined thresholds to detect the speech segments. This method offers better results than the previous one does, although it still has difficulties to detect speech segments in unfavorable noise conditions.

United States patent US-6615170 discloses an alternative method for the detection of speech segments which, rather than being based on the comparison of a parameter or a parameter vector with a threshold or set of thresholds, is based on training acoustic noise and speech models and on comparing the input signal with said models, determining if a determined frame is speech or noise by means of maximization of the maximum verisimilitude. A state machine is used in FR 2 856 506 A1.

Besides these patents and other similar ones, the treatment of the task of the detection of noise and speech segments in the scientific literature is quite extensive, there being a number of articles and lectures presenting different methods of carrying out said detection. Thus, for example, "Voice Activity Detection Based on Conditional MAP Criterion" (Jong Won Shin, Hyuk Jin Kwon, Suk Ho Jin, Nam Soo Kim; in IEEE Signal Processing Letters, ISSN: 1070-9908, Vo. 15, Feb. 2008) describes a method for the detection of speech based on a variant of the MAP (maximum a posteriori) criterion which classifies signal frames into speech or noise based on spectral parameters and using different thresholds depending on the immediately prior classification results.

With respect to the normalization, the recommendation of a method for the detection of speech included in the ETSI distributed speech recognition standard (ETSI ES 202 050 v1.1.3. Distributed Speech Recognition; Advanced Front-end Feature Extraction Algorithm; Compression Algorithms. Technical Report ETSI ES 202 050, ETSI) should be pointed out. The method recommended in the standard is based on calculating three parameters of the signal for each frame thereof and comparing them with three corresponding thresholds, using a set of several consecutive frames to make the end speech/noise decision.

However, despite the large number of proposed methods, the task of speech segment detection today continues to present considerable difficulties. The methods proposed until now, i.e., those which are based on comparing parameters with thresholds and those which are based on statistical classification, are insufficiently robust in unfavorable noise conditions, especially in the presence of non-stationary noise, which causes an increase of speech segment detection errors in such conditions. For this reason, the use of these methods in particularly noisy environments, such as the interior of automobiles, presents significant problems.

In other words, the method for the detection of speech segments proposed until now, i.e., those based on comparing parameters of the signal with thresholds and those based on statistical comparison, present significant problems of robustness in unfavorable noise environments. Their operation is particularly degraded in the presence of non-stationary noises.

As a consequence of the lack of robustness in determined conditions, it is unfeasible or particularly difficult to use automatic speech recognition systems in determined environments (such as the interior of automobiles for example). In these cases, the use of methods for the detection of speech segments based on comparing parameters of the signal with thresholds, or based on statistical comparisons, do not provide suitable results. Accordingly, automatic speech recognizers obtain a number of erroneous results and frequent rejections of user pronunciations, which makes it extremely difficult to use systems of this type.

### Description of the Invention

The invention relates to a method for the detection of speech segments according to claim 1. Preferred embodiments of the method are defined in dependent claims.

The present proposal attempts to solve such limitations by offering a method for the detection of speech segments that is robust in noisy environments, even in the presence of non-stationary noises. To that end, the proposed method is based on combining three criteria for making the decision of classifying the segments of the input signal as speech or as noise. Specifically, a first criterion relating to the energy of the signal based on the comparison with a threshold is used. A statistical comparison of a series of spectral parameters of the signal with speech and noise models is used as a second criterion. And a third criterion based on the duration of the different voice and noise pulses based on the comparison with a set of thresholds is used.

The proposed method for the detection of speech segments is performed in three stages. In the first stage the signal frames the energy of which does not exceed a certain energy threshold, the value of which is automatically updated in real time depending on the existing noise level, are discarded. In the second stage, the speech frames that are not discarded are subjected to a decision-making method combining the three criteria set forth in order to classify said frames as speech or noise. Finally, in the third stage the noise and speech segments obtained are validated according to a criterion of duration, the segments the duration of which does not exceed a certain threshold being eliminated.

Combining the three criteria and performing the method in the three proposed stages allows obtaining the noise and speech segments with a greater precision that those that are obtained with other methods, especially in unfavorable noise conditions. This segment detection is carried out in real time and can therefore be applied in automatic interactive speech recognition systems.

The object of the present invention is a method for the detection of noise and speech segments in a digital audio input signal, said input signal being divided into a plurality of frames comprising:
- a first stage in which a first classification of a frame as noise is performed if the mean energy value for this frame and the previous N frames is not greater than a first energy threshold, N being an integer greater than 1;
- a second stage in which for each frame that has not been classified as noise in the first stage it is decided if said frame is classified as noise or as speech based on combining at least a first criterion of spectral similarity of the frame with acoustic noise and speech models, a second criterion of analysis of the energy of the frame with respect to a second energy threshold, and a third criterion of duration consisting of using a state machine for detecting the beginning of a segment as an accumulation of a determined number of consecutive frames with spectral similarity greater than a first acoustic threshold and another determined number of consecutive frames with spectral similarity less than said first acoustic threshold for detecting the end of said segment;
- a third stage in which the classification of the signal frames as speech or as noise carried out in the second stage is reviewed using criteria of duration, classifying the speech segments having a duration of less than a first minimum segment duration threshold, as well as those which do not contain a determined number of consecutive frames simultaneously exceeding said acoustic threshold and said second energy threshold as noise.

In other words, the method of the invention is performed in three stages: a first stage based on energy threshold, a second stage of multicriterion decision-making and a third stage of duration check.

The decision-making of the second stage is based on:
- On one hand, the simultaneous use of three criteria: spectral similarity, energy value and duration (a minimum number of consecutive frames that are spectrally similar to the noise model at the end of the segment is necessary for considering the latter to be finished).
- On the other hand, the use of different states, which introduces a certain hysteresis both for detecting the beginning of the segment (it is necessary to accumulate several frames with spectral similarity greater than the threshold) and for the end thereof (hysteresis).

This makes the operation better by eliminating false segment beginnings and ends.

Two duration thresholds are preferably used in the third stage:
- A first minimum segment duration threshold.
- A second duration threshold of consecutive frames which meet both the criterion of spectral similarity and that of minimum energy.

The use of this double threshold improves in cases of impulsive noises and mumbling of the user.

The invention can be used as part of a speech recognition system. It can also be used as part of a speaker identification or verification system, or as part of an acoustic language detection system or of a multimedia content acoustic indexing system.

The use of the criteria of duration, both in the second and in the third stage, means that the method will correctly classify non-stationary noises and mumbling of the user, something which the methods known up until now did not do: the criteria based on energy thresholds are not capable of discriminating non-stationary noises with high energy values, whereas the criteria based on comparing acoustic characteristics (whether they are in the time domain or in the spectral domain) are not capable of discriminating guttural sounds and mumbling of the user given their spectral similarity with speech segments. However, combining spectral similarity and energy allows discriminating a larger number of noises of this type from speech segments. And the use of criteria of duration allows preventing signal segments with noises of this type from being erroneously classified as speech segments.

On the other hand, the manner in which the three criteria are combined in the described stages of the method optimizes the capacity of correctly classifying noise and speech segments. Specifically, the application of a first energy threshold prevents segments with a low energy content from being taken into account in the acoustic comparison. Unpredictable results, which are typical in methods of detection based on acoustic comparison which do not filter out segments of this type and those which compare a mixed feature vector with spectral and energy characteristics, are thus prevented. The use of a second energy threshold prevents eliminating speech segments with low energy levels in the first stage, since it allows using a first rather unrestrictive energy threshold which eliminates only those noise segments with a very low energy level, leaving the elimination of noise segments of a higher power for the second stage, in which the more restrictive second energy threshold intervenes. The combined use of acoustic and energy thresholds in the second stage allows discriminating noise segments from speech segments: on one hand, the demand to exceed both thresholds prevents classifying the high energy noise segments but with spectral characteristics that are different from speech (non-stationary noises, such as blows or cracking) and the noise segments that are acoustically similar to speech but with low energy (mumbling and guttural sounds) as speech; on the other hand, the use of two independent comparisons instead of a mixed feature (acoustic and energy) vector allows adjusting the method of detection. The use of criteria of duration in this second stage (need to exceed an accumulated acoustic score threshold at the beginning of the speech segment and to link a minimum number of noise signal frames at the end of said segment together) allows detecting as noise the signal segments with non-stationary noises of a short duration, as well as classifying segments corresponding to sounds which, though they are speech, have a lower tone, as is the case of phonemes corresponding to occlusive and fricative consonants (k, t, s,...), as speech. Finally, the use of the third stage allows performing a final filtering, eliminating the noise segments which have been classified as speech but do not reach the minimum duration, correcting the errors of the first two stages of the method with a different procedure with respect to all those used in other methods.

The correct classification of signal frames with high energy noises and with mumbling makes it possible to use the method in recognition systems in different environments: at the office, in the home, automobile interiors, etc., and with different use channels (microphone or telephone). It is also applicable in different types of vocal applications: vocal information services, vocal equipment control, etc.

### Brief Description of the Drawings

To complement the description that is being made and for the purpose of aiding to better understand the features of the invention, an embodiment of the invention is briefly described below as an illustrative and non-limiting example thereof.
Figure 1 depicts a block diagram of the method for the detection of speech segments.
Figure 2 shows a state diagram of the noise and speech frame classification process.
Figure 3 shows the method for checking frames which simultaneously comply with acoustic and energy thresholds.
Figure 4 depicts the flowchart of the validation of duration thresholds.

### Description of a Preferred Embodiment of the Invention

According to the preferred embodiment of the invention, the method for the detection of noise and speech segments is carried out in three stages.

As a step prior to the method, the input signal is divided into frames of a very short duration (between 5 and 50 milliseconds), which are processed one after the other.

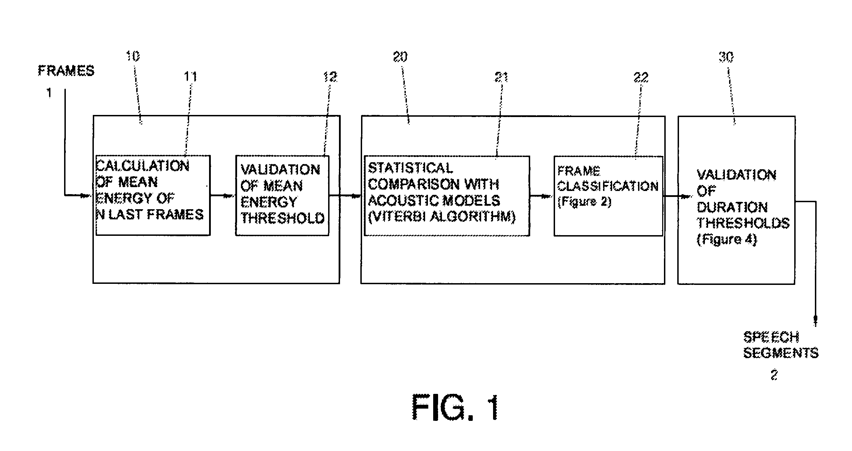

As is shown in Figure 1, the energy is calculated for each frame 1 in a first stage 10. The average of the energy value for this frame and the previous N frames is calculated (block 11: calculation of mean energy of N last frames), where N is an integer the values of which vary depending on the environment; typically N=10 in environments with little noise and N>10 for noisy environments. Then, this mean value is compared (block 12: validation of mean energy threshold) with a first energy threshold Threshold_energ1, the value of which is modified in the second stage depending on the noise level, and the initial value thereof being configurable; typically, for frames of 10 ms, Threshold_energ1=15, which value can be adjusted according to the application. If the mean energy value of the last frames does not exceed said first energy threshold Threshold_energ1, the frame is definitively classified as noise and the processing thereof ends, the process of the next signal frame beginning. If, on contrast, the mean value does exceed said first energy threshold, the frame continues to be processed, passing to the second stage 20 of the method.

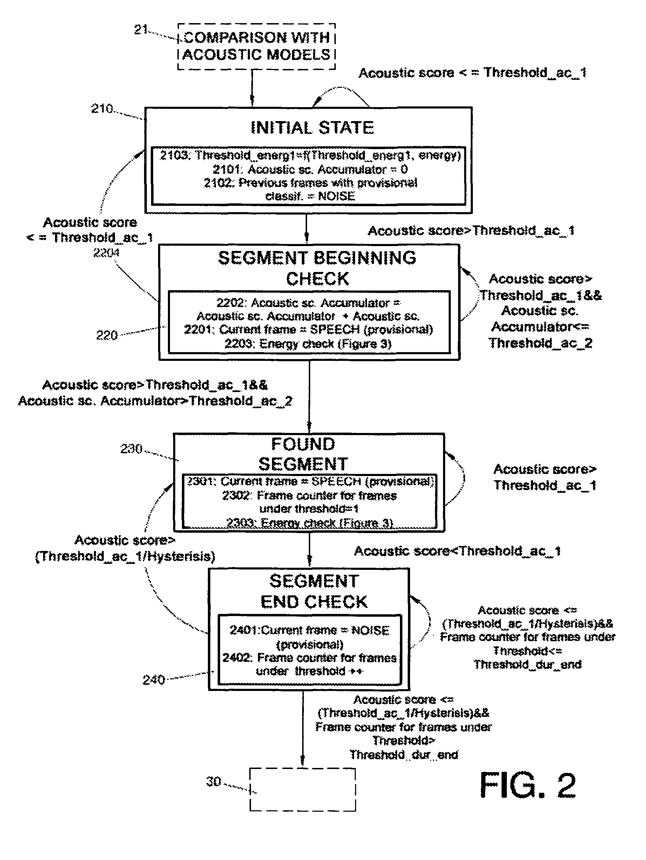

Two processes are performed in the second stage 20:
- a statistical comparison of the frame which is being processed with acoustic speech and noise models (block 21: statistical comparison with acoustic models (Viterbi algorithm)), and
- a frame classification process (block 22: frame classification) for classifying it as speech or noise (see Figure 2).

In order to carry out the statistical comparison, a feature vector is first obtained which consists of a set of spectral parameters obtained from the signal. Specifically, a subset of the parameters forming the feature vector proposed in the ETSI ES 202 050 standard is selected.

How the subset of parameters is selected is described below:
- The probability density functions of the value of each of the parameters for the speech frames and noise frames are first estimated from the values of the parameter obtained with a set of acoustic speech and noise signals different from those which will be analyzed.
- The classification error probability of each parameter is calculated by using the estimated probability density functions.
- A list of the parameters is created, ordered from a lower to a higher value of this error probability.
- A subset formed by the N first parameters of the list is chosen, the value of N being comprised between 0 and 39. Typically N=5, but it can vary depending on the application.

The statistical comparison requires the existence of acoustic speech and noise models. Specifically, Hidden Markov Models (HMM) are used to statistically model two acoustic units: one represents the speech frames and the other one represents the noise frames. These models are obtained before using the method for the detection of noise and speech segments of the present invention. To that end, these acoustic units are previously trained using for that purpose recordings containing noise and speech segments labeled as such.

The comparison is carried out using the Viterbi algorithm. The probability that the current frame is a speech frame and the probability that it is a noise frame is thus determined from the feature vector obtained in the frame which is being processed, from the statistical speech and noise models, and from the comparison data of the previously processed frames. An acoustic score parameter calculated by dividing the probability that the frame is a speech frame by the probability that the frame is a noise frame is also calculated.

The frame classification process (block 22) is carried out by means of a decision-making process (see Figure 2) which takes into account the acoustic score parameter obtained in the statistical comparison process 21 and other criteria, including the decisions of classifying previous frames as speech or noise.

This Figure 2 depicts a state diagram, in which when a transition (for example, if the acoustic score is less than "threshold_ac_1") occurs, the state passes to that indicated by the arrow, and the processes included in said state are carried out. For this reason the processes appear in the next state once the transition has been made.

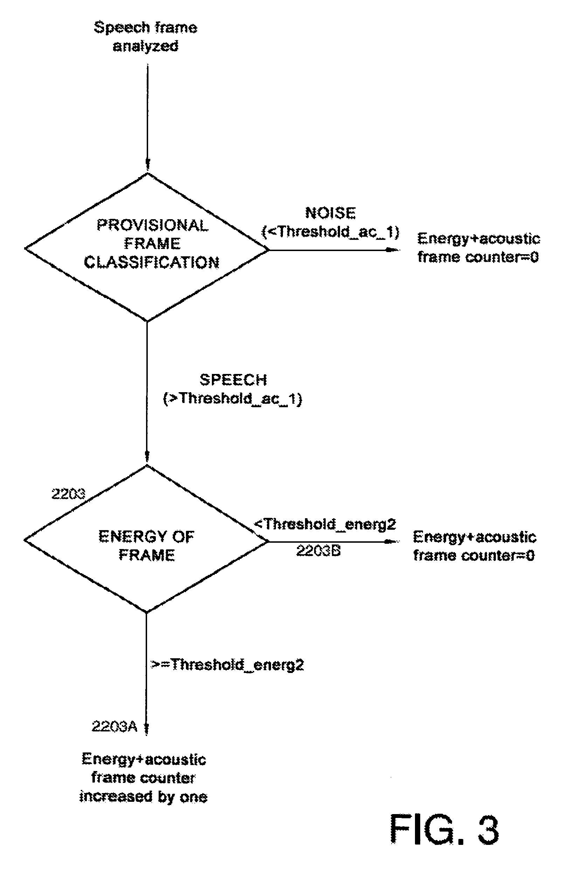

As is shown in Figure 2, the steps of the decision-making process are the following:
* Initial state 210: An acoustic score accumulator, Acoustic sc. Accumulator (2101), is set to zero. The possible previous frames which were provisionally classified as speech or as noise (2102) are classified as noise.
   The acoustic score parameter obtained in the statistical comparison is then compared with a first acoustic threshold, Threshold_ac_1.
   A) If it does not exceed said first acoustic threshold Threshold_ac_1 the following actions are performed:
      i) The current frame is definitively classified as noise (2102).
      ii) The first energy threshold used in the first stage, Threshold_energ1 (2103), is updated obtaining a mean (weighted by a memory factor) between its current value and the energy value of the current frame. The memory factor is a value between 0 and 1; it typically has a value of 0.9, which is adjustable depending on the application.
      iii) The next signal frame is then processed from the first stage 10 of the method.
   B) In the event that the acoustic score parameter obtained in the statistical comparison exceeds said first acoustic threshold Threshold_ac_1, the following actions are performed:
      i) The current frame is provisionally classified as speech (2201).
      ii) The value of the acoustic score accumulator is updated with the value of the acoustic score parameter obtained in the statistical comparison (2202).
      iii) It is checked (2203) if the energy of the signal exceeds a second energy threshold, Threshold_energ2 (see Figure 3), calculated from the current value of the first energy threshold Threshold_energ1 (used in the first stage 10 of the method), the value of which is obtained by multiplying said first energy threshold Threshold_energ1 by a factor and adding an additional offset to it. This factor has a configurable value between 0 and 1, and the offset, also with a configurable value, can acquire both positive and negative values, its absolute value ranging between 0 and 10 times the value of the first energy threshold, Threshold_energ1. If it exceeds said second energy threshold, Threshold_energ2, a first consecutive frame counter for frames exceeding both the first acoustic threshold Threshold_ac_1 (of the statistical comparison) and this second energy threshold Threshold_energ2 starts with value 1.
      iv) It passes to the next state: speech segment beginning check state 220.
      v) The next signal frame is then processed from the first stage 10 of the method.
* Speech segment beginning check state 220: the acoustic score parameter obtained in the statistical comparison is compared with the first acoustic threshold, Threshold_ac_1.
   A) If it does not exceed said first acoustic threshold Threshold_ac_1, the following actions are performed:
      i) Both the current frame and all the previous frames provisionally classified as speech are classified as noise (2102).
      ii) The acoustic score accumulator (2101) and the first consecutive frame counter for frames exceeding both the second energy threshold Threshold-energ_2 and the first acoustic score threshold Threshold_ac_1 are set to zero.
      iii) It is returned (2204) to the initial state 210.
      iv) The next signal frame is then processed from the first stage 10 of the method.
   B) In the event that the acoustic score parameter obtained in the statistical comparison exceeds said first acoustic threshold Threshold_ac_1, the following actions are performed:
      i) The current frame is provisionally classified as speech (2301 or 2201).
      ii) It is checked (2303 or 2203) if the energy of the signal exceeds the second energy threshold, Threshold_energ2 (see Figure 3).
         - If it exceeds it, the first consecutive frame counter for frames exceeding both the first acoustic threshold Threshold_ac_1 of the statistical comparison and the second energy threshold Threshold_energ2 is increased (2203A in Figure 3).
         - If it does not exceed it, said first consecutive frame counter is set to zero (2203B in Figure 3).
      iii) The value of the acoustic score accumulator (2202) is increased by adding the value of the acoustic score parameter obtained in the statistical comparison to it.
      iv) It is checked if the value of the acoustic score accumulator exceeds a second accumulated acoustic score threshold, Threshold_ac_2.
         - If it does not exceed said second acoustic threshold Threshold_ac_2, the next signal frame is then processed from the first stage 10 of the method.
         - If it exceeds said second acoustic threshold Threshold_ac_2:
            1) It passes to the found speech segment state 230.
            2) The next signal frame is then processed from the first stage 10 of the method.
* Found speech segment state 230: the acoustic score parameter obtained in the statistical comparison is compared with the first acoustic threshold, Threshold_ac_1.
   A) If the acoustic score parameter exceeds said first acoustic threshold Threshold_ac_1, the following actions are performed:
      i) The current frame is provisionally classified as speech (2301).
      ii) It is checked (2303) if the energy of the signal exceeds the second energy threshold Threshold_energ2 (see Figure 3).
         - If it exceeds it, the first consecutive frame counter for frames exceeding both the first acoustic threshold Threshold_ac_1 of the statistical comparison and the second energy threshold Threshold_energ2 is increased (2203A in Figure 3).
         - If it does not exceed it, said first consecutive frame counter is set to zero (2203B in Figure 3).
      iii) The next signal frame is then processed from the first stage 10 of the method.
   B) In the event that the acoustic score parameter obtained in the statistical comparison does not exceed the first acoustic threshold, Threshold_ac_1, the following actions are performed:
      i) The current frame is provisionally classified as noise (2401).
      ii) It passes to the speech segment end check state 240.
      iii) a second consecutive frame number counter for frames not exceeding the modified acoustic threshold (the first time it must be under threshold_ac_1 to start the counter; the counter increases are subsequently made when the modified threshold (divided by a hysteresis factor) is not exceeded) is started at 1 (2302).
      iv) The next signal frame is then processed from the first stage 10 of the method.
* Speech segment end check state 240: The acoustic score parameter obtained in the statistical comparison is compared with a modified threshold resulting from dividing the first acoustic threshold Threshold_ac_1 by a hysteresis factor, Hysteresis.
   A) If the acoustic score parameter exceeds said modified threshold, Threshotd_ac_1/Hysteresis, the following actions are performed:
      i) The current frame is provisionally classified as speech. The previous frames which were provisionally classified as noise are also provisionally classified as speech (2301).
      ii) It is checked (2203 or 2303) if the energy of the signal exceeds the second energy threshold, Threshold_energ_2.
         - If it exceeds it, the first consecutive frame counter for frames exceeding both the modified threshold Threshold_ac_1/Hysteresis of the statistical comparison and the second energy threshold Threshold_energ2 is increased (2203A in Figure 3).
         - If it does not exceed it, said first consecutive frame counter is set to zero (2203B in Figure 3).
      iii) It passes to the found speech segment state 230.
      iv) The next signal frame is then processed from the first stage 10 of the method.
   B) In the event that the acoustic score parameter obtained in the statistical comparison does not exceed the modified threshold Threshold_ac_1/Hysteresis, the following actions are performed:
      i) The current frame is provisionally classified as noise (2401).
      ii) The second consecutive frame number counter for frames not exceeding the modified acoustic threshold is increased (2402).
      iii) It is checked if said second consecutive frame number counter for frames not exceeding the modified acoustic threshold, Threshold_ac_1/Hysteresis is greater than an end of voice pulse search duration threshold, Threshold-dur-end. If it is greater, it passes to the third stage 30 of the method of detection.
      Otherwise, the next signal frame is then processed from the first stage 10 of the method.

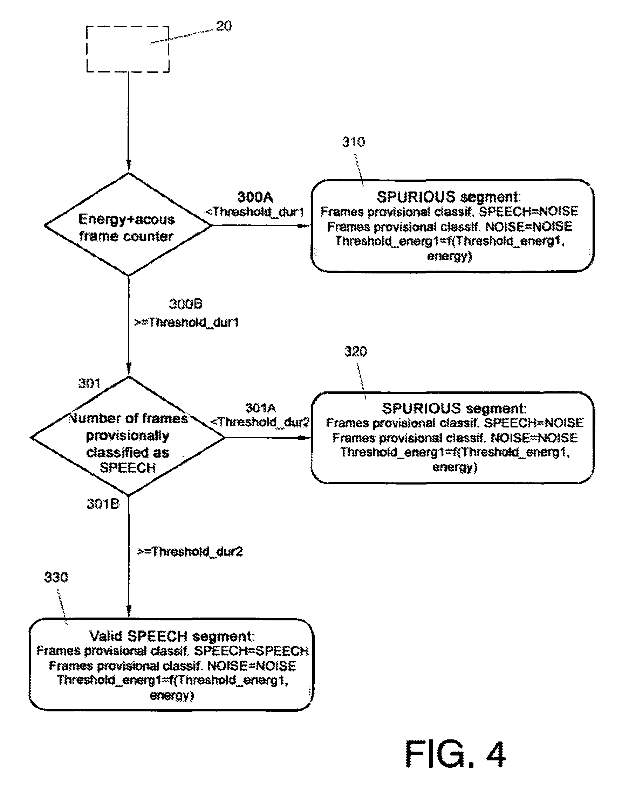

The speech/noise classification of the signal frames carried out in the second stage is reviewed in the third stage 30 of the method of the present invention using the criteria of duration in order to thus finally detect the speech segments 2. The following checks are made (see Figure 4):
- If the maximum value reached during the second stage 20 by the first consecutive frame counter for frames exceeding both the first acoustic threshold Threshold_ac_1 and the second energy threshold Threshold_ energ_2 is less than (300A) a first duration threshold, Threshold_dur1, it is considered that the detected speech segment is spurious (310) and is discarded. Consequently, all the signal frames provisionally classified as speech and as noise which comply with this criterion are definitively classified as noise.
- If the maximum value reached during the second stage 20 of said first counter is greater than or equal to (300B) said first duration threshold, Threshold_dur_1, it is checked (301) if the total number of all the frames provisionally classified as speech exceeds a second duration threshold Threshold_dur2.
   - In the event that it does not exceed it (301 A), it is considered that the detected speech segment is spurious (320) and, consequently, all the signal frames provisionally classified as speech or as noise which comply with this criterion are definitively classified as noise.
   - If this second duration threshold, Threshold-dur2, is exceeded (301 B), the frames provisionally classified as speech are definitively classified as speech (330), and the frames provisionally classified as noise are definitively classified as noise.

The following actions are further carried out in the third stage:
- The first energy threshold Threshold_energ1 used in the first stage 10 of the method is updated, obtaining a mean (weighted by a memory factor) between its current value and the energy value of the current frame.
- The next signal frame is then processed from the first stage 10 of the method. In the event that said frame passes to the second stage 20 of the method, the decision-making process will begin from the initial state 210.

The invention has been described according to a preferred embodiment thereof, but for the person skilled in the art it will be evident that many variations can be introduced in said preferred embodiment without exceeding the object of the claimed invention.

## Claims

1. Method for the detection of noise and speech segments (2) in a digital audio input signal, said input signal being divided into a plurality of frames (1) comprising:
- a first stage (10) in which a first classification of a frame as noise is performed if the mean energy value for this frame and the previous N frames is not greater than a first energy threshold (threshold_energ1), N being an integer greater than 1;
- a second stage (20) in which for each frame that has not been classified as noise in the first stage it is decided if said frame is classified as noise or as speech based on combining at least a first criterion of spectral similarity of the frame with acoustic noise and speech models, a second criterion of analysis of the energy of the frame with respect to a second energy threshold (threshold_energ2) and a third criterion of duration consisting of using a state machine for detecting the beginning of a segment as an accumulation of a determined number of consecutive frames with spectral similarity greater than a first acoustic threshold (threshold_ac1) and another determined number of consecutive frames with spectral similarity less than said first acoustic threshold for detecting the end of said segment
wherein in the second stage, for each frame that has not been classified as noise in the first stage:
- a probability that the frame is a noise frame is calculated by comparing spectral characteristics of said frame with those same spectral characteristics of a group of frames classified as noise which do not belong to the signal that is being analyzed;
- a probability that the frame is a speech frame is calculated by comparing spectral characteristics of said frame with those same spectral characteristics of a group of frames classified as speech which do not belong to the signal that is being analyzed;
- the next state of the state machine is calculated depending on at least a ratio between the probability that the frame is a speech frame and the probability that the frame is a noise frame, and on a current state of said state machine; and
- a third stage (30) in which the classification as speech or as noise of the signal frames carried out in the second stage is reviewed using criteria of duration, classifying the speech segments having a duration of less than a first minimum segment duration threshold, as well as those which do not contain a determined number of consecutive frames simultaneously exceeding said first acoustic threshold and said second energy threshold, as noise;
wherein the state machine comprises at least an initial state (210), a state in which it is checked that a speech segment (220) has begun, a state in which it is checked that the speech segment (230) continues, and a state in which it is checked that the speech segment (240) has ended;
and wherein for a transition between the state in which it is checked that a speech segment (220) has begun and the state in which it is checked that a speech segment (230) continues to occur, at least two consecutive frames in which the ratio between the probability that the frame is a speech frame and the probability that the frame is a noise frame is greater than said first acoustic threshold are required.

2. Method according to claim 1, wherein two duration thresholds are used in said third stage:
- a first minimum segment duration threshold (threshold_dur1), or minimum number of consecutive frames classified as speech or as noise;
- a second duration threshold (threshold-dur2) of consecutive frames which comply with both the criterion of spectral similarity and the criterion of analysis of the energy of the frame in the second stage.

3. Method according to any of claims 1-2, wherein said criterion of spectral similarity used in the second stage consists of a comparative analysis of spectral characteristics of said frame with spectral characteristics of said previously established acoustic noise and speech models.

4. Method according to claim 3, wherein said comparative analysis of spectral characteristics is performed using the Viterbi algorithm.

5. Method according to any of claims 1-4, wherein said previously established acoustic noise and speech models are obtained by statistically modeling two acoustic noise and speech units, respectively, by means of Hidden Markov Models.

6. Method according to any of claims 1-5, wherein for a transition between the state checking that a speech segment (240) has ended and the initial state (210) to occur, at least two consecutive frames in which the ratio between the probability that the frame is a speech frame and the probability that the frame is a noise frame is less than a first acoustic threshold divided by a factor.

7. Method according to any of claims 1-6, wherein the first energy threshold used in the first stage is dynamically updated by weighting its current value and the energy value of the frames classified as noise in the second and third stages.

8. Method according to claim 1-2, wherein the criterion of analysis of the energy of the frame (2203, 2303) consists of exceeding a second energy threshold calculated by multiplying the first energy threshold by a factor and adding an offset to it.

## Patentansprüche

1. Verfahren zur Detektion von Rausch- und Sprachsegmenten (2) in einem digitalen Audioeingangssignal, wobei das Eingangssignal in eine Vielzahl von Rahmen (1) aufgeteilt ist, umfassend:
- eine erste Stufe (10), in welcher eine erste Klassifizierung eines Rahmes als Rauschen durchgeführt wird, wenn der mittlere Energiewert für diesen Rahmen und die vorangegangenen N Rahmen nicht größer als ein erster Energieschwellwert (threshold_energl) ist, wobei N ein Integer höher als 1 ist;
- eine zweite Stufe (20), in welcher für jeden Rahmen, welcher in der ersten Stufe nicht als Rauschen klassifiziert worden ist, entschieden wird, ob der Rahmen als Rauschen oder als Sprache klassifiziert wird basierend auf Kombinieren mindestens einen ersten Kriteriums der spektralen Ähnlichkeit des Rahmens mit akustischen Rausch- und Sprachmodellen, eines zweiten Kriteriums der Analyse der Energie des Rahmens in Bezug auf einen zweiten Energieschwellwert (threshold_energ2) und eines dritten Kriteriums der Dauer bestehend aus der Verwendung einer Zustandsmaschine zur Detektion des Anfangs eines Segments als eine Akkumulation einer ermittelten Anzahl von aufeinander folgenden Rahmen mit spektraler Ähnlichkeit höher als ein erster akustischer Schwellwert (threshold_ac1) und einer anderen ermittelten Anzahl von aufeinander folgenden Rahmen mit spektraler Ähnlichkeit geringer als der erste akustische Schwellwert zum Detektieren des Endes des Segments,
wobei in der zweiten Stufe für jeden Rahmen, welcher in der ersten Stufe nicht als Rauschen klassifiziert worden ist:
- eine Wahrscheinlichkeit, dass der Rahmen ein Rauschrahmen ist, berechnet wird durch Vergleichen spektraler Eigenschaften des Rahmens mit solchen gleichen spektralen Eigenschaften einer Gruppe von als Rauschen klassifizierten Rahmen, welche nicht zu dem Signal, welches analysiert wird, gehören;
- eine Wahrscheinlichkeit, dass der Rahmen ein Sprachrahmen ist, berechnet wird durch Vergleichen spektraler Eigenschaften des Rahmens mit solchen gleichen spektralen Eigenschaften einer Gruppe von als Sprache klassifizierten Rahmen, welche nicht zu dem Signal, welches analysiert wird, gehören;
- der nächste Zustand wird berechnet abhängig von mindestens einem Verhältnis zwischen der Wahrscheinlichkeit, dass der Rahmen ein Sprachrahmen ist, und der Wahrscheinlichkeit, dass der Rahmen ein Rauschrahmen ist, und von einen aktuellen Zustand der Zustandsmaschine; und
- eine dritte Stufe (30), in welcher die in der zweiten Stufe durchgeführte Klassifizierung der Signalrahmen als Sprache oder als Rauschen überprüft wird durch Verwendung von Kriterien der Dauer, klassifizieren der Sprachsegmente mit einer Dauer geringer als ein erster Minimum-Segementdauerschwellwert, und auch solche, welche nicht eine bestimmte Anzahl von aufeinander folgenden Rahmen enthalten und gleichzeitig den ersten akustischen Schwellwert und den zweiten Energieschwellwert überschreiten, als Rauschen;
wobei die Zustandmaschine mindestens einen initialen Zustand (210), einen Zustand, in welchem geprüft wird, dass ein Sprachsegment (220) begonnen hat, einen Zustand, in welchem geprüft wird, dass das Sprachsegment (230) weitergeht, und einen Zustand, in welchem geprüft wird, dass das Sprachsegment (240) geendet hat, umfasst;
and wobei zum Auftreten eines Übergangs von einem Zustand, in welchem geprüft wird, dass ein Sprachsegment (220) begonnen hat, und dem Zustand, in welchem geprüft wird, dass ein Sprachsegment (230) weitergeht, mindestens zwei aufeinander folgende Rahmen benötigt werden, in welchen das Verhältnis zwischen der Wahrscheinlichkeit, dass der Rahmen ein Sprachrahmen ist, und der Wahrscheinlichkeit, dass der Rahmen ein Rauschrahmen ist, höher als der erste akustische Schwellwert ist.

2. Verfahren nach Anspruch 1, wobei die zwei Dauer-Schwellwerte in der dritte Stufe verwendet werden:
- ein erster Minimum-Segmentdauerschwellwert (threshold_dur1), oder Minimum-Anzahl von aufeinander folgenden als Sprache oder Rauschen klassifizierter Rahmen;
- ein zweiter Minimum-Dauerschwellwert (threshold_dur2) von aufeinander folgenden Rahmen, welche sowohl das Kriterium der spektralen Ähnlichkeit als auch das Kriterium der Analyse der Energie des Rahmen in der zweiten Stufe erfüllen.

3. Verfahren nach einem der Ansprüche 1 bis 2, wobei das in der zweiten Stufe verwendete Kriterium der spektralen Ähnlichkeit aus einer Vergleichsanalyse der spektralen Eigenschaften des Rahmens mit spektralen Eigenschaften der vorhergehend eingerichteten akustischen Rausch- und Sprachmodelle besteht.

4. Verfahren nach Anspruch 3, wobei die Vergleichsanalyse der spektralen Eigenschaften durch Verwendung eines Viterbialgorithmus durchgeführt wird.

5. Verfahren nach einem der Ansprüche 1 bis 4, wobei die vorhergehend eingerichteten akustischen Rausch- und Sprachmodelle erhalten werden durch jeweiliges statistisches Modellieren zweier akustischen Rausch- und Spracheinheiten durch versteckte Markov-Modelle.

6. Verfahren nach einem der Ansprüche 1 bis 5, wobei zum Auftreten eines Übergangs zwischen dem Zustand, in welchem geprüft wird, das ein Sprachsegment (240) geendet hat, und dem initialen Zustand (210), mindestens zwei aufeinander folgende Rahmen, in welchem das Verhältnis zwischen der Wahrscheinlichkeit, dass der Rahmen ein Sprachrahmen ist, und der Wahrscheinlichkeit, dass der Rahmen ein Rauschrahmen ist, weniger ist als ein erster akustischer Schwellwert geteilt durch einen Faktor.

7. Verfahren nach einem der Ansprüche 1 bis 6, wobei der in der ersten Stufe verwendete erste Energieschwellwert dynamisch aktualisiert wird durch Gewichtung seines aktuellen Werts und dem Energiewert der Rahmen, welche in der zweiten und dritten Stufe als Rauschen klassifiziert sind.

8. Verfahren nach einem der Ansprüche 1 bis, wobei das Kriterium der Analyse der Energie des Rahmens (2203, 2303) aus Überschreiten eines zweiten Energieschwellwerts, welcher durch die Multiplikation des ersten Energieschwellwerts mit einen Faktor und Addition eines Offsets hierzu berechnet wird, besteht.

## Revendications

1. Procédé permettant la détection de bruit et de segments de parole (2) dans un signal d'entrée audio numérique, ce signal d'entrée étant subdivisé en plusieurs trames (1) comprenant :
- un premier étage (10) dans lequel, une première classification d'une trame entant que bruit, est mis en oeuvre si la valeur d'énergie moyenne de cette trame et des N trames précédentes n'est pas supérieure à un premier seuil d'énergie (threshold_energ1), N étant un nombre entier supérieur à 1,
- un second étage (20) dans lequel pour chacune des trames qui n'a pas été classée entant que bruit dans le premier étage, il est décidé si cette trame est classée entant que bruit ou entant que parole à partir de la combinaison d'au moins un premier critère de similarité spectrale de la trame avec des modèles de parole et de bruit acoustique, un second critère d'analyse de l'énergie de la trame par rapport à un second seuil d'énergie (threshold_energ2) et un troisième critère de durée consistant en l'utilisation d'une machine d'état pour détecter le début d'un segment entant qu'une accumulation d'un nombre prédéterminé de trames consécutives avec une similarité spectrale supérieure à un premier seuil acoustique (threshold_ac_1) et d'un autre nombre déterminé de trames consécutives avec une similarité spectrale inférieure au premier seuil acoustique pour détecter la fin de ce segment,
selon lequel
dans le second étage, pour chacune des trames n'ayant pas été classées en tant que bruit dans le premier étage :
- une probabilité que la trame soit une trame de bruit est calculée en comparant les caractéristiques spectrales de cette trame avec les mêmes caractéristiques spectrales d'un groupe de trames classées entant que bruits qui n'appartiennent pas au signal en cours d'analyse,
- une probabilité que la trame soit une trame de parole est calculée en comparant les caractéristiques spectrales de cette trame avec les mêmes caractéristiques spectrales d'un groupe de trames classées entant que parole qui n'appartiennent pas au signal en cours d'analyse,
- l'état suivant de la machine d'état est calculé en fonction d'au moins le rapport entre la probabilité que la trame soit une trame de parole et la probabilité que la trame soit une trame de bruit, et de l'état de courant de la machine d'état, et
- un troisième étage (30) dans lequel la classification entant que parole ou entant que bruit des trames de signaux mise en oeuvre dans le second étage est revue en utilisant des critères de durée, en classant les segments de parole ayant une durée inférieure à un premier seuil de durée de segment minimum ainsi que ceux qui ne renferment pas un nombre défini de trames consécutives dépassant simultanément le premier seuil acoustique et le second seuil d'énergie entant que bruit,
la machine d'état comprenant au moins un état initial (210), un état dans lequel on contrôle qu'un segment de parole (220) a commencé, un état dans lequel on contrôle que le segment de parole (230) se poursuit, et un état dans lequel on vérifie que le segment de parole (240) s'est achevé, et
pour la transition entre l'état dans lesquels on contrôle qu'un segment de parole (220) a débuté et l'état dans lequel on contrôle qu'un segment de parole (230) se poursuit, au moins deux trames consécutives dans lesquelles le rapport entre la probabilité que la trame soit une trame de parole et la probabilité que la trame soit une trame de bruit est supérieure au premier seuil acoustique sont nécessaires.

2. Procédé conforme à la revendication 1, selon lequel deux seuils de durée sont utilisés dans le troisième étage :
- un premier seuil de durée de segment minimum (threshold_dur1) ou un nombre minimum de trames consécutives classées entant que parole ou entant que bruit,
- un second seuil de durée (threshold_dur2) de trames consécutives qui remplissent à la fois le critère de similarité spectrale et le critère d'analyse de l'énergie de la trame dans le second étage.

3. Procédé conforme à l'une quelconque des revendications 1 et 2, selon lequel le critère de similarité spectrale utilisé dans le second étage consiste en une analyse comparative de caractéristiques spectrales de cette trame avec les caractéristiques spectrales des modèles de bruit acoustique et des modèles de parole établis antérieurement.

4. Procédé conforme à la revendication 3, selon lequel l'analyse comparative des caractéristiques spectrale est mise en oeuvre en utilisant l'algorithme de Viterbi.

5. Procédé conforme à l'une quelconque des revendications 1 à 4, selon lequel les modèles de parole et de bruit acoustique antérieurement établis sont obtenus par modélisation statistique de deux unités de parole et de bruit acoustique respectivement au moyen de modèles de Hidden Markov.

6. Procédé conforme à l'une quelconque des revendications 1 à 5, selon lequel pendant la transition entre l'état de vérification qu'un segment de parole (240) s'est achevé et que l'état initial (210) arrive, au moins deux trames consécutives dans lesquelles le rapport entre la probabilité que la trame soit une trame de parole et la probabilité que la trame soit une trame de bruit est inférieure à un premier seuil acoustique divisé par un facteur.

7. Procédé conforme à l'une quelconque des revendications 1 à 6, selon lequel le premier seuil d'énergie utilisé dans le premier stage est dynamiquement mis à jour en pondérant sa valeur courante et la valeur d'énergie des trames classées entant que bruit dans le second et dans le troisième étage.

8. Procédé conforme à la revendication 1 ou 2, selon lequel le critère d'analyse de l'énergie de la trame (2203, 2303) est le dépassement d'un second seuil d'énergie calculé en multipliant le premier seuil d'énergie par un facteur et en lui ajoutant un décalage.
